# EUROPEAN PATENT APPLICATION

(11) **EP 4 730 702 A1**
(43) Date of publication of application: **22.04.2026**
(21) Application number: 24207561.2
(22) Date of filing: 18.10.2024
(51) Int. Cl.: H04L 9/40, H04L 9/32, H04W 12/06, H04W 12/069

(54) **AN APPARATUS AND A METHOD FOR INTERACTING WITH A DIGITAL KEY ON A KEY CARD**

(71) Applicant: Bayerische Motoren Werke Aktiengesellschaft, 80809 München (DE)
(72) Inventor: Dr. Kuelzer, Daniel, 80799 München (DE)

(57) **Abstract**

The present document describes an apparatus (110) for interacting with a key card (160), wherein the apparatus (110) is configured to automatically determine a password for an authenticated key exchange, PAKE, scheme, and to execute the PAKE scheme with the key card (160) using the password. Furthermore, the apparatus (110) is configured to, subsequent to executing the PAKE scheme, perform a digital key-related interaction with the key card (160), which relates to a digital key (111, 161) enabled for controlling one or more vehicle functions (103) of a vehicle (100).

## Description

The present document is directed at interacting with a digital key on a key card, wherein the digital key is enabled for controlling one or more functions of a vehicle.

A vehicle may comprise a communication unit which allows a user to control one or more functions of the vehicle using a portable device, such as a smartphone or a smart watch. Example functions which may be controlled using the portable device are unlocking and/or locking of a door of the vehicle and/or starting the engine of the vehicle. The portable device typically comprises a digital key for authentication of the portal device at the vehicle. Such a portable device may be referred to as a digital key device. The digital key may be a CCC (Car Connectivity Consortium) digital key.

A user of a digital key device may share the digital key for controlling the one or more vehicle functions with a key card for enabling the key card to control the one or more vehicle functions. The present document is directed at the technical problem of enabling a secure, flexible and/or efficient interaction with a (shared) digital key on a key card.

The technical problem is solved by each one of the independent claims. Preferred examples are specified in the dependent claims.

According to an aspect, an apparatus (e.g., a device or a server) for interacting with a key card is described, wherein the apparatus is configured to automatically determine a password for an authenticated key exchange, PAKE, scheme, notably for the SPAKE2+ scheme, and to execute the PAKE scheme, notably the SPAKE2+ scheme, with the key card using the password. The apparatus is further configured, subsequent to executing the PAKE scheme, to perform a digital key-related interaction with the key card, wherein the interaction relates to a digital key enabled and/or configured for controlling one or more vehicle functions of a vehicle.

According to another aspect, a method for interacting with a key card is described, wherein the method comprises automatically determining a password for an authenticated key exchange, PAKE, scheme, notably for the SPAKE2+ scheme. Furthermore, the method comprises executing the PAKE scheme, notably the SPAKE2+ scheme, with the key card using the password, and subsequent to executing the PAKE scheme, performing a digital key-related interaction with the key card, which relates to a digital key enabled for controlling one or more vehicle functions of a vehicle.

According to a further aspect, a software program is described. The software program may be adapted for execution on a processor and for performing the method steps of the method outlined in the present document when carried out on the processor.

According to another aspect, a storage medium is described. The storage medium may comprise a software program adapted for execution on a processor and for performing the method steps of the method outlined in the present document when carried out on the processor.

According to a further aspect, a computer program product is described. The computer program may comprise executable instructions for performing the method steps of the method outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Furthermore, it is noted that brackets are used within the present document to indicate optional features.

The invention is explained below in an exemplary manner with reference to the accompanying drawings, wherein
Fig. 1a shows an example system for controlling a vehicle function using a digital key device;
Fig. 1b shows an example digital key device, notably an owner and/or a sharer device;
Fig. 1c shows an example key card;
Fig. 2 illustrates an example scenario for sharing a digital key with a key card;
Fig. 3 shows an example process for sharing a digital key with a key card; and
Fig. 4 shows a flow chart of an example method for performing a digital key-related interaction with a key card.

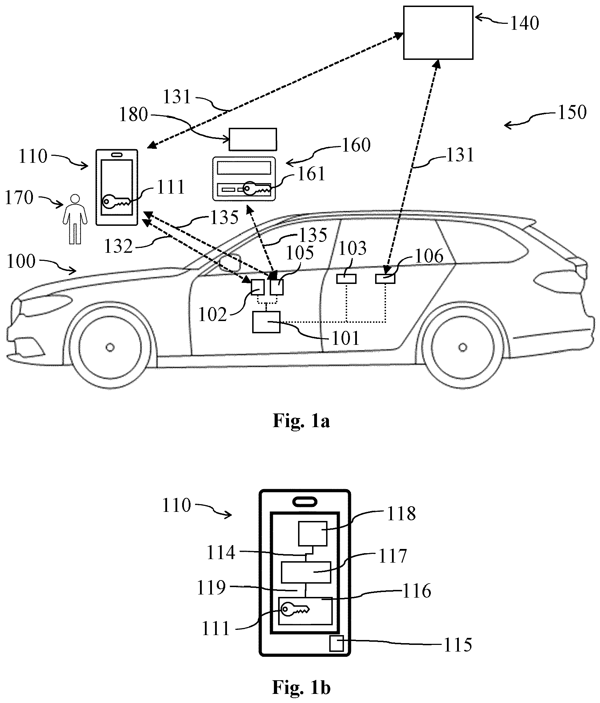

As outlined above, the present document is directed at the technical problem of interacting with a digital key for controlling one or more functions of a vehicle in an efficient, reliable and/or secure manner. In this context, Fig. 1a shows an example system 150 which comprises a vehicle 100 and at least one digital key device 110. The digital key device 110 may be a portable electronic device, such as a smartphone, a tablet PC, a wearable smart device (such as a smart watch), etc., wherein a digital key 111 is stored on the portable electronic device, notably on a protected memory section (e.g., the secure element) of the portable electronic device. The device 110 typically comprises an integrated power supply, such as a battery, in order to allow the device 110 to be operated in an autonomous manner.

The digital key device 110 may communicate with a communication unit 102, 105 of the vehicle 100 via one or more different wireless communication links 132, 135. Different communication links 132, 135 may be used for different purposes. In particular, a Bluetooth Low Energy (BLE) communication link 132 may be used to
- determine the distance and/or the relative position between the digital key device 110 and the vehicle 100 (notably based on the signal strength, in particular the RSSI (Received Signal Strength Indicator), of the radio signals which are exchanged between the vehicle 100 and the device 110, and/or based on a channel sounding technique); and/or
- exchange data between the digital key device 110 (e.g., a control command for controlling a vehicle function, such as unlocking a door and/or opening or closing a window and/or activating or deactivating a heating function).

Alternatively, or in addition, a Ultrawideband (UWB) communication link may be used to determine the location of the device 110 relative to the vehicle 100 in a relatively precise manner. The determination of the location of the device 110 using the UWB communication link may be referred to as UWB ranging.

Alternatively, or in addition, a Near Field Communication (NFC) communication link 135 may be used to provide a short-range communication between the device 110 and the vehicle 100. For establishing the NFC communication link 135, the device 110 may be held in close proximity (e.g. in a distance of less than 10 cm) from the communication unit 105 of the vehicle 100.

A control unit 101 of the vehicle 100 may be configured to control at least one vehicle function 103 of the vehicle 100 in dependence of the communication between the device 110 and the vehicle 100. In this context, the digital key 111 of the device 110 may be verified, in particular authenticated. Furthermore, subject to authentication, one or more vehicle functions 103 may be controlled, notably in dependence of
- the distance between the device 110 and the vehicle 100;
- the location of the device 110 relative to the vehicle 100; and/or
- a control command sent by the device 110 to the vehicle 100 via a communication link 112, 135.

In an example system 150, a BLE communication link 112 may be established between the device 110 and the vehicle 100, once the distance between the device 110 and the vehicle 100 is equal to or less than a first distance threshold. Once the BLE communication link 112 has been established, the device 110 may be authenticated with the vehicle 100 using the digital key 111 of the device 110. Subject to authentication of the device 110, the device 110 may be enabled to send one or more control commands via the communication link 112 for controlling one or more vehicle functions 103.

The system 150 may comprise a vehicle-server 140 which may e.g. be managed by a manufacturer of the vehicle 100. The device 110 and/or a communication unit 106 of the vehicle 100 may be configured to communication with the vehicle-server 140 via a (wireless) communication link 131 (e.g., a 3G, 4G, 5G or higher communication link).

Fig. 1b shows details of an electronic device 110 (i.e., the digital key device). Fig. 1b shows the secure storage area 116, in particular the so-called "secure element", in which the digital key 111 is stored. The secure storage area 116 typically comprises a digital key (DK) applet that is designed to provide one or more functions (e.g., generating a digital signature) with respect to the digital key 111.

The device 110 may comprise an operating system 117 which is configured to interact with the storage area 116, notably with the key applet of the storage area 116, via a (secure) data interface 119. The operating system 117 may execute a software application 118, e.g. a software application 118 which is configured to interact with the vehicle-server 140. The operating system 117 may be configured to transfer data between the software application 118 and the operating system 117 via a data interface 114. Furthermore, the device 110 may comprise a communication module 115, notably an NFC communication module, for establishing an NFC communication link 135 with the vehicle 100 or with a key card 160.

The user 170 of the device 110 with the digital key 111 may enable another user and/or another electronic device to control one or more vehicle functions 103. For this purpose, the digital key device 110 may cause a shared digital key to be provided to another electronic device, wherein the shared digital key typically determines the scope of the one or more vehicle functions 103 that can be controlled by the other electronic device. The shared digital key is derived from the digital key 111. In particular, the shared digital key may be a subordinate key of the digital key 111 (within a given public key infrastructure, PKI, and/or within a given chain of key certificates).

The digital key device 110 (which may also be referred to as the sharer device) may send a transfer request to the vehicle server 140 and/or to the other device via the communication link 131, in order to initiate the creation of a shared digital key on the other device. The transfer request may be signed with the digital key 111 of the digital key device 110. Furthermore, the transfer request may specify a set of the one or more vehicle functions 103 that can be controlled by the digital key (i.e., the entitlements of the shared digital key).

Hence, the digital key device 110 may provide information (e.g., the entitlements) which is used for creating a shared digital key to the other device (which may be referred to as the receiver device). The receiver device may create the shared digital key (with a secret key and a public key). The public key (PK) of the shared digital key (along with information such as the entitlements) may be sent to the digital key device 110. The digital key device 110 may sign the PK of the shared digital key (along with the information regarding the shared digital key), e.g. using the private key of the digital key 111. This data forms a first part of the attestation of the shared digital key.

The first part of the attestation may be sent to the vehicle server 140. The vehicle server 140 may verify the first part of the attestation (using the PK of the digital key 111) and may optionally create an immobilizer token (which is typically needed for an engine start of the vehicle 100). Furthermore, the vehicle server 140 may sign a data package comprising the first part of the attestation and/or data added by the vehicle server 140 (using the private key of the central digital key of the vehicle server 140), thereby generating the attestation for the shared digital key. This attestation may be sent to and/or compiled by the receiver device (i.e., to the other electronic device). Alternatively, or in addition, the attestation may be sent (by the vehicle server 140) to the vehicle 100.

The attestation can be used by the vehicle 100 to check the authenticity of the shared digital key of the other electronic device. For this purpose, the vehicle 100 uses the digital key 111, notably the public key of the digital key 111, of the digital key device 110, from which the sharing of the shared digital key was initiated. The digital key 111 of the device 110 may have been used to sign one or more properties of the shared digital key (such as the entitlements of the shared digital key). Furthermore, a central digital key, notably the public key (PK) of the central digital key, of the vehicle server 140 may be required, with which the attestation for the shared digital key for the other electronic device 120 has been signed. The central digital key may have been used to sign meta information regarding the shared digital key (such as the receipt of the KTS (key tracking server)).

Typically, the shared digital key (along with other metadata) is comprised within the attestation, such that only the attestation is provided to the vehicle 100 and/or to the other electronic device (within respective messages). From this attestation 122, the shared digital key can be extracted. The integrity of the attestation may be verified using the (public key of) the central digital key of the vehicle server 140 and/or the (public key of the) digital key 111 from which the shared digital key was derived.

It may be desirable to enable the user 170 of the digital key device 110 to share the digital key 111 with a smart and/or key card 160 (referred to herein as a key card) which typically only comprises substantially reduced communication and/or processing capability compared with an electronic device, such as a smartphone. In particular, the key card 160 typically does not comprise its own power supply (e.g., battery), such that the key card 160 cannot be operated autonomously. The key card 160 may be configured to receive electrical power for operating the key card 160 (exclusively) via a communication link 135, notably via a NFC communication link. This may be the only power source for operating the key card 160, i.e., the electronic components of the key card 160.

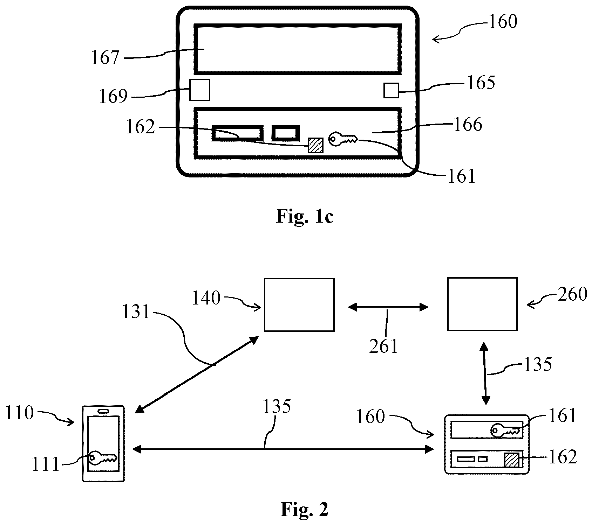

Fig. 1c shows an example key card 160 having a communication module 165, notably an NFC communication module, and a secure storage area 166, notably a secure element, wherein the storage area 166 is configured to store a shared digital key 161 and/or the attestation 162 for the shared digital key 161. Furthermore, the key card 160 may comprise an applet 167 (notably a digital key (DK) applet) which provides a set of commands for interacting with the key card 160, notably with the storage area 166 of the key card 160. The applet 167 may be executed on a processor of the key card 160 (when the key card 160 is provided with electrical energy from an external power supply). In addition, the key card 160 may have a code 169, in particular a machine-readable code such as a QR code, printed on the surface of the key card 160. The code 169 may be indicative of a password which may be used for establishing a secure communication channel with the key card 160 and/or for enabling a (digital key-relates) interaction with the key card 160.

The digital key device 110, notably the owner and/or sharer device, may interact with a key card 160 via a communication link 135, in particular via a NFC communication link, as illustrated in Fig. 2. Hence, the device 110 may be used as a NFC card reader 180 for the key card 160. The communication link 135 may be used to manage, e.g. to share or create, to terminate and/or to delete, the shared digital key 161 on the key card 160.

The key card 160 is typically provided by a key card provider, wherein the key card provider may operate a card server 260. The card server 260 and the key card 160 may interact via a communication link 135, notably via a NFC communication link, e.g. to install software on the key card 160, such as the digital key applet 167, and/or to provide PKI (public key infrastructure) data to the key card 160. The PKI data of the card server 260 is typically independent from the PKI data used by the vehicle server 140 (for the digital key 111). The PKI data on the key card 160 may comprise a key pair for enabling a secure communication with the key card 160. In particular, the PKI data may comprise an Instance CA of the key card 160 (which may be used for securely identifying the key card 160). The card server 260 and the vehicle server 140 may be configured to communicate with one another via a (wireless and/or wireline) communication link 261.

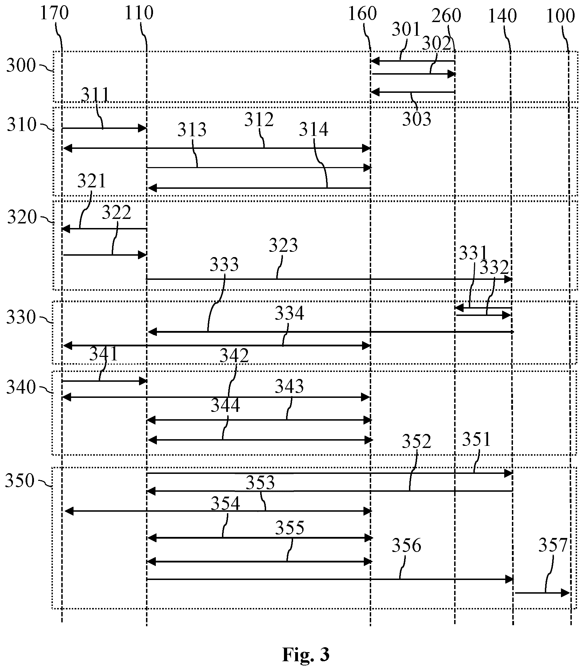

Fig. 3 illustrates an example process for sharing a digital key 111 from a digital key device 110, notably the owner and/or sharer device, to a key card 160. The process involves the digital key device 110, in particular the digital key applet of the device 110, the key card 160, notably the digital key applet 167 of the key card 160, the card server 260, the vehicle server 140 (including a key tracking server (KTS) for tracking one or more shared digital keys 161) and/or the vehicle 100.

In a preparatory phase 300 (which is typically performed by the key card provider), the digital key applet 167 may be provided on the key card 160 (step 301), e.g. via the communication link 135 between the card server 260 and the key card 160. Furthermore, PKI data, notably the so-called instance CA, may be provided by the card server 260 to the key card 160 (step 301). The instance CA may comprise a key pair with a public key PK and a private key SK. Furthermore, a certificate for the instance CA may be provided, wherein the instance CA certificate may be signed by the card server 260 (using a SK of the digital key of the card server 260), in order to certify the validity of the instance CA (steps 302, 303). As a result of this, the key card 160 may comprise a DK applet 167 which enables the key card 160 to perform actions with regards to a shared digital key 161. Furthermore, the key card 160 may comprise an instance CA with an instance CA certificate, which enables the key card 160 to be identified in a secure manner.

In a subsequent phase 310, the digital key device 110 may identify the key card 160 to which the shared digital key 161 is to be provided. For this purpose, the sharing process (for sharing a digital key 111, 161) may be initiated by the user 170 of the digital key device 110 via a user interface of the digital key device 110 (step 311). The user interface may e.g. be provided by the (vehicle-related) software application 118 running on the digital key device 110. The key card 160 may be placed on the communication unit 105 of the digital key device 110 for establishing a (NFC) communication link 135 between the digital key device 110 and the key card 160 (step 312).

The digital key device 110, notably the DK applet of the device 110, may then request provision of the Instance CA of the key card 160 from the key card 160, notably from the DK applet 167 of the key card 160 (step 313). The key card 160 may then provide the Instance CA certificate to the digital key device 110 (step 314). The Instance CA certificate (possibly in conjunction with one or more further certificates from the certificate chain of the Instance CA) may be used to identify the key card 160 in a secure and unambiguous manner.

In a subsequent phase 320, the user 170 may be requested to authorize the sharing process for sharing the digital key 111, 161 with the key card 160 which is identified by the Instance CA. For this purpose, the digital key device 110 may generate Hardware Token Sharing Data based on the Instance CA certificate of the key card 160 and based on the vehicle identifier of the vehicle 100 (for which the shared digital 161 is to be used). The Hardware Token Sharing Data may be provided to the vehicle server 140 within a pre-sharing step, in order to enable the vehicle server to identify the key card 160, to which the digital key 111, 161 is to be shared (step 323).

The user may be asked to authorize the transferal of the Hardware Token Sharing Data to the vehicle server 140 via the user interface of the digital key device 110 (steps 321, 322). Subject to authorization by the user, the Hardware Token Sharing Data may be signed by the DK applet of the device 110 (using the private key (SK) of the digital key 111), and the signed Hardware Token Sharing Data may be provided to the vehicle server 140 (step 323). The vehicle server 140 may verify the validity of the instance CA certificate of the key card 160, which is provided within the signed Hardware Token Sharing Data using the digital key 111, notably using the PK of the digital key 111, of the digital key device 110.

Once the vehicle server 140 has been informed about the identity of the key card 160, to which the digital key 111 is to be shared, (using the Instance CA of the key card 160) pairing data may be shared, in order to enable the digital key device 110 and the key card 160 to build up a secure communication channel between the device 110 and the key card 160, e.g. for sharing the digital key 111 (phase 330), and/or to enable a digital key-relates interaction with the key card 160. An ECC (elliptic-curve cryptography)-based pairing algorithm protocol may be used for this purpose, in particular the SPAKE2+ protocol (i.e., the SPAKE2+ scheme). The SPAKE2+ protocol is e.g. described in chapter 18 of the CCC-TS-101 specification (e.g., release 3). This specification is incorporated herein by reference in its entirety.

The pairing data (notably a password) may be requested by the vehicle server 140 from the card server 260 (step 331) and may subsequently be provided to the vehicle server 140 (step 332). Subsequently, the pairing data (notably the password) may be provided (by the vehicle server 140) to the device 110 (step 333). Alternatively, or in addition, the password for the pairing protocol may be provided via a code 169 which is visible on the key card 160 (step 334). As a result of this, the device 110 holds the pairing data (notably the password), which may be used to build up a secure communication channel with the key card 160 and/or to perform a digital key-related interaction with the key card 160.

In a subsequent phase 340, the pairing data may be used to set up a secure communication channel between the device 110 and the key card 160 for sharing the digital key 111. The user 170 may select the digital key 111 which is to be shared (step 341). Furthermore, the user 170 may select the entitlements of the shared digital key 161 (in particular the entitlements with regards to the one or more vehicle functions 103 that can be controlled using the shared digital key 161).

The user 170 may place the key card 160 onto and/or near the device 110 (i.e., the key card reader 180) in order to set up a (NFC) communication link 135 between the device 110 and the key card 160 (step 342). Subsequently, the pairing algorithm protocol, notably the SPAKE2+ protocol, may be executed (step 343) using the pairing data (notably the password) that has been provided to the device 110 (step 343). The key card 160 may act as "verifier" within the pairing algorithm protocol. As a result of the pairing algorithm protocol a secure communication channel between the device 110 and the key card 160 is established, which may be used to generate a shared digital key 161 on the key card 160 and/or to interact with the key card 160 regarding the shared digital key 161 (step 344). The process for generating the shared digital key 161 may be referred to as the endpoint creation process.

During the endpoint creation process, the shared digital key 161 is generated based on the digital key 111. Furthermore, a certificate for the shared digital key 161 is generated (wherein the certificate may be indicative of the key chain that the shared digital key 161 is derived from). The certificate (including the shared digital key 161) may be stored in a memory slot of the storage area 166 of the key card 160, thereby providing a (CCC) endpoint on the key card 160.

Furthermore, the attestation 162 for the shared digital key 161 may be generated by the device 110 (within phase 350). The attestation 162 typically includes
- a key identifier of the shared digital key 161;
- the PK (public key) of the shared digital key 161;
- information regarding the validity of the shared digital key 161; and/or
- information regarding the entitlements of the shared digital key 161.

The attestation 162 may be signed by the device 110 (using the SK (private key) of the digital key 111). The signed attestation 162 may be sent to the vehicle server 140 (step 351) and the vehicle server 140 may verify the authenticity of the attestation 162 using the PK of the digital key 111. In addition, the vehicle server 140 may sign the verified attestation 162 using the private key (SK) of the central digital key of the vehicle server 140. Furthermore, the vehicle server 140 may pass the attestation 162 (including the shared digital key 161) to the key tracking server (KTS), thereby enabling tracking of the shared digital key 161.

The signed attestation 162 (signed by the vehicle server 140) may be passed back to the device 110 (step 352), possibly along with a receipt of the KTS and/or an (encrypted) immobilizer token (for enabling the shared digital key 161 to start the engine of the vehicle 100).

Subsequently, the signed attestation 162 may be provided to (and stored on) the key card 160. For this purpose, the user 170 may place the key card 160 onto and/or near the device 110 (i.e., the card reader 180) to establish a communication link 135 (step 353). Furthermore, the pairing algorithm protocol, notably the SPAKE2+ protocol (i.e., scheme), may be executed, to set up a secure communication channel between the device 110 and the key card 160 and/or to enable a digital key-related interaction with the key card 160 (step 354). Eventually, the attestation 162 may be written to the key card 160 (step 354). Furthermore, the vehicle server 140 may be informed that the key sharing process is terminated (step 356). In addition, the attestation 162 (including the (PK of the) shared digital key 161) may be sent from the vehicle server 140 to the vehicle 100, thereby enabling the use of the shared digital key 161 for controlling one or more vehicle functions 103 of the vehicle 100.

Hence, for the protection of one or more sensitive commands (i.e., interactions) with regards to the key card 160 (such as the create, alter, terminate and/or delete endpoint command), a PAKE scheme, notably the SPAKE2+ protocol, may be used. When providing a digital key 161 to a key card 160, the device 110 or card reader 180 (in conjunction with the vehicle server 140) takes the active part (server) and the key card 160 acts as the passive part (client).

In other words, a password-based scheme, notably a password authenticated key exchange, PAKE, scheme, may be used to enable the interaction with a digital key 161 of a key card 160. The interaction may comprise
- the creation of a digital key 161 on the key card 160 (e.g., as outlined in the context of Fig. 3);
- the modification of the digital key 161 which is stored on the key card 160 (e.g., in order to modify the entitlement of the digital key 161, notably with regards to the one or more vehicle functions 103 that can be controlled using the digital key 161); and/or
- the termination and/or deletion of the digital key 161 which is stored on the key card 160 (e.g., in order to enable the key card 160 to be used with a different digital key).

As outlined in the context of Fig. 3, the password for enabling the interaction with the key card 160 regarding the digital key 161 may be provided within a code 169 that is depicted on the surface of the digital key 161. Alternatively, or in addition, the password may be provided within an email or a letter. The password may then be entered manually by the user 170 of the device 110 (e.g., the owner device, the sharer device and/or the authorized device), in order to enable the digital key-related interaction with the key card 160.

In order to increase the comfort for the user 170, the password may be provided by the vehicle server 140 directly to the device 110, such that the password can be used by the device 110 automatically to enabling the digital key-related interaction with the key card 160 (without the need of manually entering the password and/or of scanning a code 169). As a result of this, the digital key-related interaction with the key card 160 may be performed in a particularly comfortable and secure manner.

The device 110 may be configured to store the password within the storage area 116, notably within the secure element, of the device 110. In other words, the password may be cached on the device 110. The device 110 may be configured to retrieve the password from the storage area 116 when executing the password-based scheme (i.e., the PAKE scheme) for enabling the digital key-related interaction with the key card 160. By doing this, the digital key-related interaction with the key card 160 may be enabled in a particularly comfortable and secure manner.

The device 110 may be enabled to contact the card server 260 directly (without involving the vehicle server 140) for retrieving the password directly from the card server 260. For this purpose, a message may be sent from the device 110 to the card server 260 (via a communication link 131), wherein the message comprises the Instance CA certificate of the key card 160, thereby indicating to the card server 260 the key card 160 for which the password is requested.

As an alternative to an owner device 110, a digital key 111 may be owned by a server, e.g., a server for managing a fleet of vehicles (e.g., a server of a car rental company). A server that owns a digital key 111 to a vehicle 100 may be referred to as a SBOD (Server Based Owner Device). A SBOD is typically the root element of the sharing tree (i.e. of the key hierarchy) of one or more digital keys 111, 161. When a vehicle 100 is infleeted into a fleet of vehicles, a SBOD may be created for this vehicle 100, such that a rental or fleet provider can interact with the SBOD to request one or more key sharings, i.e., one or more shared digital keys 161 (for one or more different electronic devices, e.g., for one or more customers of the rental provider).

Alternatively, or in addition, a sharer and/or owner and/or authorized device 110 may share a digital key 111 with a server, wherein a server with a shared digital key 161 may be referred to as a SBFD (Server Based Friend Device). A SBFD may be created by directly or indirectly receiving a shared digital key 161 from the owner (a natural person or a server) of the digital key 111 for the vehicle 100.

Hence, a digital key 111, 161 may be held and/or may be shared by a server. The server may request the password for enabling the digital key-related interaction with the key card 160 (i.e., the password for executing the PAKE scheme) directly from the card server 260 and/or indirectly via the vehicle server 140 (as outlined above in the context of Fig. 3). In particular, the server may take the role of the device 110 when retrieving the password.

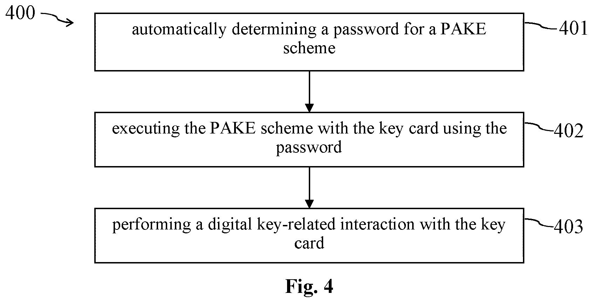

Fig. 4 shows a flow chart of an example (possibly computer-implemented) method 400 for interacting with a key card 160. The method 400 may be executed by an apparatus such as a device 110 (notably a digital key device) and/or a server (notably a SBOD or a SBFD).

The method 400 comprises automatically determining 401 a password for an authenticated key exchange (PAKE) scheme, notably for the SPAKE2+ scheme. The password may be determined without the need of a user action of a user 170, notably without the need for a user 170 to manually input the password and/or to scan a code 169 which is indicative of the password. The password may be derived automatically from a storage area 116 of the apparatus and/or from a database on a server 260. As already indicated above, the SPAKE2+ scheme is described e.g. in chapter 18 of the CCC-TS-101 specification (release 3), which is incorporated herein by reference in its entirety.

Furthermore, the method 400 comprises executing 402 the PAKE scheme, notably the SPAKE2+ scheme, with the key card 160 using the password. As a result of the execution of the PAKE scheme a (secure) communication channel may be established between the apparatus 110 (which intends to interact with the key card 160) and the key card 160.

The method 400 further comprises, subsequent to executing 402 the PAKE scheme, performing 403 a digital key-related interaction with the key card 160, wherein the digital key-related interaction relates to a digital key 111, 161 that is enabled and/or configured for controlling one or more vehicle functions 103 of a vehicle 100. The digital key-related interaction may comprise
- sending a create endpoint command to the key card 160 (via the communication channel) for creating a (shared) digital key 161 (and the associated endpoint);
- sending a modify endpoint command to the key card 160 (via the communication channel) for modifying the list of one or more vehicle functions 103 that can be controlled by the digital key 161;
- sending a terminate endpoint command to the key card 160 (via the communication channel) for terminating the validity and/or usability of the (shared) digital key 161 (and the associated endpoint); and/or
- sending a delete endpoint command to the key card 160 (via the communication channel) for deleting the memory slot for the (shared) digital key 161 (and for the associated endpoint) from the storage area 166 of the key card 160.

By determining the password for the PAKE scheme in an automatic manner, a particularly comfortable and secure digital key-related interaction with the key card 160 may be achieved.

Hence, an apparatus 110 for interacting with a key card 160 is described. The apparatus 110 may comprise, notably may be, a handheld (digital key) device 110 (such as a smart device, notably such as a smartphone) or a server. Furthermore, the apparatus 110 may comprise a digital key 111 enabled for controlling one or more vehicle-functions 103 of a vehicle 100. The digital key 111 may be a Car Connectivity Consortium, CCC, digital keys, according to the CCC Digital Key Standard, Release 3 or higher.

The apparatus 110 is configured to automatically determine a password for an authenticated key exchange, PAKE, scheme, notably for the SPAKE2+ scheme. The apparatus 110 may be configured to automatically determine the password by sending a request for password provision (directly) to a card server 260 which is associated with the key card 160. The request may comprise the Instance CA of the key card 160. The apparatus 110 and the card server 260 may communicate via a communication link 131, 261. Furthermore, the apparatus 110 may be configured to receive the password (directly) from the card server 260.

Alternatively, or in addition, the apparatus 110 is configured to automatically determine the password by sending a request for password provision to the vehicle server 140 which is associated with the vehicle 100 and/or with the digital key 111 (of the apparatus 110). The vehicle server 140 may determine the password on behalf of the apparatus 110 (e.g. as outlined in the context of Fig. 3). For this purpose, the vehicle server 140 may communicate with the card server 260. Furthermore, the apparatus 110 may be configured to receive the password from the vehicle server 140.

The apparatus 110 may be configured to store the password in a storage area 116 (e.g., a secure element) for retrieval, notably in a storage area 116 of the apparatus 110. In particular, the password may have been stored within the storage area 116 at a previous time instant (e.g., within the context of a previous interaction with the key card 160). The apparatus 110 may be configured to automatically determine the password by retrieving the password from the storage area 116, notably from the storage area 116 of the apparatus 110.

The apparatus 110 may be configured to determine an Instance CA certificate of the key card 160 (e.g., by communicating with the key card 160 (via a NFC communication link). The Instance CA certificate may be part of a certificate chain, wherein the certificate chain may go up to the root certificate of the provider of the key card 160. The apparatus 110 may be configured to automatically determine the password using the Instance CA certificate of the key card 160 for identification of the key card 160. In other words, the Instance CA certificate of the key card 160 may be used for identification of the key card 160 (e.g., within the request for password provision to a server 140, 260). As a result of this, the password may be determined in a particularly reliable and secure manner.

The apparatus 110 may be configured to automatically determine the password by signing the request for password provision (to the card server 260 and/or to the vehicle server 140) using the digital key 111. The digital signature may be generated by signing the Instance CA certificate of the key card 160. Furthermore, the apparatus 110 may be configured to send the signed request for password provision to a server 140, 260 (notably to the vehicle server 140 and/or to the card server 260) for requesting provision of the password from the server 140, 260. As a result of this, the password may be determined in a particularly reliable and secure manner.

Hence, the apparatus 110 may be configured to determine the password for the PAKE scheme without the need of a user interaction with the apparatus 110, in particular, without the need for the user 170 to manually enter the password and/or without the need for the user 170 to scan a code 169 which is indicative of the password.

The apparatus 110 is further configured to execute the PAKE scheme, notably the SPAKE2+ scheme, with the key card 160 using the password. In particular, the apparatus 110 may be configured to set up a (secure) communication channel with the key card 160 using the PAKE scheme, notably the SPAKE2+ scheme, and the password. The communication channel may be set up via a near field communication (NFC) communication link 135 between the apparatus 110 (e.g., between a card reader 180 of the apparatus 110) and the key card 160.

The NFC communication link 135 between the apparatus 110 and the key card 160 may be set up subject to placing the key card 160 near to the card reader 180 of the apparatus 110. Placing the card reader 180 and the key card 160 in close proximity to one another may cause the key card 160 to be provided with electrical energy from the card reader 180, e.g. using inductive energy transfer from the card reader 180 to the key card 160. The key card 160 may start operation subject to receiving electrical energy from the card reader 180, in order to build up the NFC communication link 135 and/or in order to build up the (secure) communication channel and/or in order to execute the PAKE scheme, notably the SPAKE2+ scheme.

Furthermore, the apparatus 110 is configured to, subsequent to executing the PAKE scheme, perform a digital key-related interaction with the key card 160. The digital key-related interaction with the key card 160 may be performed via the (secure) communication channel. The digital key-related interaction may relate to a digital key 111, 161 that is enabled and/or configured for controlling one or more vehicle functions 103 of the vehicle 100. The digital key 111, 161 may be a shared digital key 161 derived from the digital key 111 of the apparatus 110.

The apparatus 110 may be configured to perform a digital key-related interaction with the key card 160 by
- creating a digital key 161 (notably a shared digital key derived from the digital key 111 of the apparatus 110) which is enabled and/or configured for controlling one or more vehicle functions 103 of the vehicle 100 on the key card 160;
- altering the digital key 161 on the key card 160, notably with regards to the one or more vehicle functions 103 than can be controlled by the digital key 161; and/or
- terminating and/or deleting the digital key 161 on the key card 160.

The digital key-related interaction with the key card 160 may relate to the digital key 111, in particular to a shared digital key 161 which is derived from the digital key 111. The apparatus 110 may be configured to share the digital key 111 with the key card 160 in order to provide the key card 160 with a shared digital key 161 that is enabled and/or configured for controlling one or more vehicle functions 103 of the vehicle 100.

Hence, an apparatus 110 is described which enables a comfortable and secure interaction with a key card 160.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. An apparatus (110) for interacting with a key card (160); wherein the apparatus (110) is configured to
- automatically determine a password for an authenticated key exchange, PAKE, scheme, notably for the SPAKE2+ scheme;
- execute the PAKE scheme, notably the SPAKE2+ scheme, with the key card (160) using the password; and
- subsequent to executing the PAKE scheme, perform a digital key-related interaction with the key card (160), which relates to a digital key (111, 161) enabled for controlling one or more vehicle functions (103) of a vehicle (100).

2. The apparatus (110) of claim 1, wherein the apparatus (110) is configured to automatically determine the password by
- sending a request for password provision to a card server (260) which is associated with the key card (160); and
- receiving the password from the card server (260).

3. The apparatus (110) of any previous claim, wherein
- the apparatus (110) comprises a digital key (111) enabled for controlling one or more vehicle-functions (103) of the vehicle (100); and
- the apparatus (110) is configured to automatically determine the password by
- sending a request for password provision to a vehicle server (140) which is associated with the vehicle (100) and/or the digital key (111); and
- receiving the password from the vehicle server (140).

4. The apparatus (110) of any previous claim, wherein the apparatus (110) is configured to
- determine an Instance CA certificate of the key card (160); wherein the Instance CA certificate is part of a certificate chain up to a root certificate of a provider of the key card (160); and
- automatically determine the password using the Instance CA certificate of the key card (160) for identification of the key card (160).

5. The apparatus (110) of any previous claim, wherein
- the apparatus (110) comprises a digital key (111) enabled for controlling one or more vehicle-functions (103) of the vehicle (100); and
- the apparatus (110) is configured to automatically determine the password by
- signing a request for password provision using the digital key (111); and
- sending the signed request for password provision to a server (140, 260) for requesting provision of the password from the server (140, 260).

6. The apparatus (110) of any previous claim, wherein the apparatus (110) is configured to
- store the password in a storage area (116) for retrieval, notably in a storage area (116) of the apparatus (110); and/or
- automatically determine the password by retrieving the password from the storage area (116), notably from the storage area (116) of the apparatus (110).

7. The apparatus (110) of any previous claim, wherein the apparatus (110) is configured to perform a digital key-related interaction with the key card 160 by
- creating a digital key (161) which is enabled for controlling one or more vehicle functions (103) of the vehicle (100) on the key card (160);
- altering the digital key (161) on the key card (160), notably with regards to the one or more vehicle functions (103) than can be controlled by the digital key (161); and/or
- terminating and/or deleting the digital key (161) on the key card (160).

8. The apparatus (110) of any previous claim, wherein the apparatus (110) is configured to
- set up a communication channel with the key card (160) using the PAKE scheme, notably the SPAKE2+ scheme, and the password; wherein the communication channel is in particular set up via a near field communication, NFC, communication link (135) between the apparatus (110) and the key card (160); and
- perform the digital key-related interaction with the key card 160 via the communication channel.

9. The apparatus (110) of any previous claim, wherein
- the apparatus (110) comprises a digital key (111) which is enabled for controlling one or more vehicle functions (103) of the vehicle (100);
- the digital key (111) notably is a Car Connectivity Consortium, CCC, digital keys, according to the CCC Digital Key Standard, Release 3 or higher; and
- the digital key-related interaction with the key card (160) relates to the digital key (111), in particular to a shared digital key (161) which is derived from the digital key (111); and/or
- the apparatus (110) is configured to share the digital key (111) with the key card (160) in order to provide the key card (160) with a shared digital key (161) which is enabled for controlling one or more vehicle functions (103) of the vehicle (100).

10. The apparatus (110) of any previous claim, wherein the apparatus (110) comprises, notably is, a handheld device (110) or a server.

11. A method (400) for interacting with a key card (160); wherein the method (400) comprises
- automatically determining (401) a password for an authenticated key exchange, PAKE, scheme, notably for the SPAKE2+ scheme;
- executing (402) the PAKE scheme, notably the SPAKE2+ scheme, with the key card (160) using the password; and
- subsequent to executing (402) the PAKE scheme, performing (403) a digital key-related interaction with the key card (160), which relates to a digital key (111, 161) enabled for controlling one or more vehicle functions (103) of a vehicle (100).
